# EUROPÄISCHE PATENTANMELDUNG

(11) **EP 0 867 268 A1**
(43) Veröffentlichungstag der Anmeldung: **30.09.1998**
(21) Anmeldenummer: 97105105.7
(22) Anmeldetag: 26.03.1997
(51) Int. Cl.: B29C 49/24

(54) **Verfahren zum Etikettieren von Gegenständen aus Kunststoff**

(71) Anmelder: Stefan Maier Werkzeugbau und Maschinenbau GmbH, 83224 Grassau (DE)
(72) Erfinder: Maier, Stefan, 83224 Grassau (DE)

(57) **Zusammenfassung**

Ein an anderer Stelle gerade gefertigter Vorformling 1 wird zu in das Hauptteil 2 der Endform geschoben. Im Hauptteil 2 befindet sich bereits das Etikett 3. Das Etikett 3 wurde von einer aus Gründen der Übersichtlichkeit nicht dargestellten Vorrichtung in das Hauptteil 2 eingesetzt. Ebenso ist es möglich gleichzeitig mit dem Einschieben des Vorformlings 1 auch das Etikett 3 in das Hauptteil 2 einzuschieben, was einen Zeitgewinn bringt.
Das Hauptteil 2 ist durch zwei Deckel 4 und 5 verschließbar. Die dem Vorformling 1 zugewandte Seite des Etiketts 3 trägt einen Kleber 6. Der Vorformling 1 sitzt auf einem Rohr 7, dessen Funktion später noch beschrieben wird. Durch die Steifigkeit des Etikettenmaterials hat das Etikett 3 die Eigenschaft sich im Hauptteil 2 aufzuspreizen und an die Innenseite des Hauptteils 2 anzulegen, wodurch ein fester Sitz in der Endform gewährleistet ist.

## Beschreibung

Die Erfindung betrifft ein Verfahren zum Etikettieren von Gegenständen aus Kunststoff gemäß dem Oberbegriff des Anspruchs 1

Bei bekannten Verfahren wird der aus Spritzgußmasse bestehende Rohling zunächst in eine Spritzform, der sogenannten Vorform gebracht, die dem späteren Endzustand des Gegenstandes schon ziemlich nahe kommt. Die so entstandene Zwischenstufe im Herstellungsprozess wird in der Fachwelt Vorformling genannt.

Anschließend wird der Vorformling in eine weitere Spritzform, die sogenannte Endform eingesetzt. In diese Endform wurde in einem anderen Herstellungsschritt zuvor ein Etikett eingebracht. Im nächsten Herstellungsschritt wird der Vorformling soweit aufgeweitet, bis der Vorformling die Form des fertigen Produkts eingenommen hat. In diesem Herstellungsschritt wird auch das zuvor in die Endform eingebrachte Etikett mit dem fertigen Produkt verbunden.

Ein derartiges Verfahren ist beispielsweise aus der DE 33 34 643 C2 bekannt. Dort besteht die Endform aus zwei Teilen, die im Laufe des Herstellungsprozesses mehrmals geöffnet und wieder geschlossen werden. Zunächst werden die Formhälften geöffnet, um es zu ermöglichen, daß das Etikettenübergabewerkzeug, zwischen die Formhälften gebracht werden kann. Anschließend werden die Formhälften geschlossen, die am Etikettenübergabewerkzeug befindlichen Etiketten kommen in Kontakt mit der Innenwandung der Formhälften und verbleiben an den Formhälften. Nun werden die Formhälften wieder geöffnet, um das Etikettenübergabewerkzeug zu entnehmen, während die Etiketten an der Innenwandung der Formhälften verbleiben. Jetzt wird der Vorformling zwischen die Formhälften positioniert, die Formhälften schließen sich wieder und der Vorformling wird soweit aufgeweitet, bis er die Form des fertigen Produkts eingenommen hat.

Nachteilig bei dem Stand der Technik ist die Tatsache, daß die Formhälften zur Aufnahme der Etiketten zusätzlich geöffnet und wieder geschlossen werden müssen. Erst anschließend kann der Vorformling eingebracht werden. Dies macht es erforderlich, Halteeinrichtungen für das Etikett innerhalb der Formhälften vorzusehen.

Auch ist es nicht möglich Rundumetiketten zu verarbeiten, da diese bei dem zum Einbringen des Vorformlings notwendigen Öffnen und Schließen der Formhälften ihre vorgegebene korrekte Lage verlieren würden.

Es ist daher Aufgabe der Erfindung ein Verfahren anzugeben, womit eine schnelle und sichere Bereitstellung des Etiketts in der Spritzform auch bei Verwendung von Rundumetiketten gewährleistet ist.

Diese Aufgabe wird gelöst durch die Merkmale des Anspruchs 1.

Die jeweiligen Unteransprüche betreffen Weiterbildungen und/oder besonders vorteilhafte Ausgestaltungen der Erfindung.

Die Überlegungen, die zum Entstehen der Erfindung führten gingen davon aus, daß allein die Steifigkeit des Etiketts dieses sich innerhalb derEndform aufspreizen läßt und so einen festen Sitz in der Endform erzeugt.

Nachfolgend wird die Erfindung anhand mehrerer Figuren näher erläutert.

Es zeigen im einzelnen
- Figur 1: die Vorrichtung, in welcher der Vorformling seine Endform annimmt, in Einzelteilen
- Figur 2: die geschlossene Vorrichtung aus Figur 1 während der Vorformling aufgeweitet wird,
- Figur 3: den fertigen Gegenstand mit aufgebrachtem Etikett.

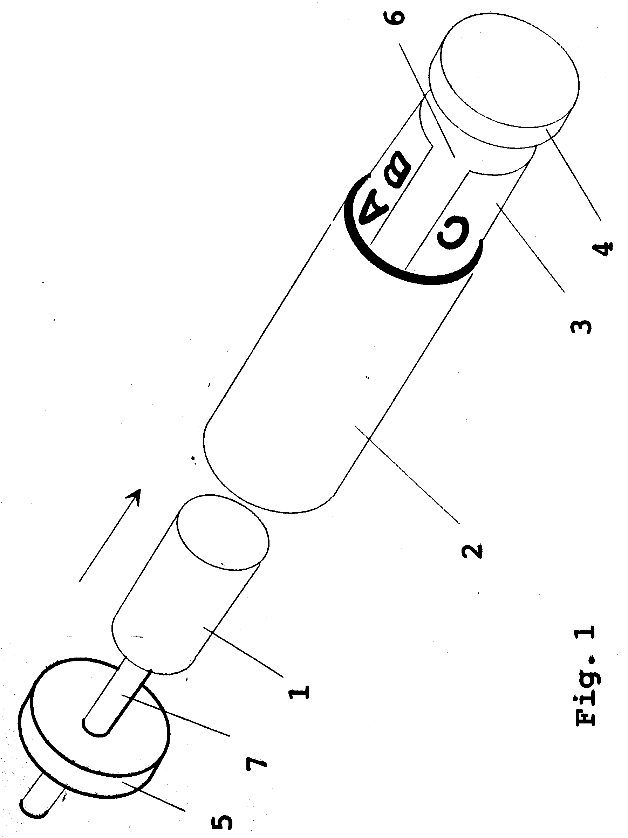

Die Figur 1 zeigt in prespektivischer, jedoch stark vereinfachter Darstellung eine Spritzgußvorrichtung. Ein an anderer Stelle gerade gefertigter Vorformling 1 wird zu in das Hauptteil 2 der Endform geschoben. Im Hauptteil 2 befindet sich bereits das Etikett 3. Das Etikett 3 wurde von einer aus Gründen der Übersichtlichkeit nicht dargestellten Vorrichtung in das Hauptteil 2 eingesetzt. Ebenso ist es möglich gleichzeitig mit dem Einschieben des Vorformlings 1 auch das Etikett 3 in das Hauptteil 2 einzuschieben, was einen Zeitgewinn bringt.
Das Hauptteil 2 ist durch zwei Deckel 4 und 5 verschließbar. Die dem Vorformling 1 zugewandte Seite des Etiketts 3 trägt einen Kleber 6. Der Vorformling 1 sitzt auf einem Rohr 7, dessen Funktion später noch beschrieben wird.

Durch die Steifigkeit des Etikettenmaterials hat das Etikett 3 die Eigenschaft sich im Hauptteil 2 aufzuspreizen und an die Innenseite des Hauptteils 2 anzulegen, wodurch ein fester Sitz in der Endform gewährleistet ist.

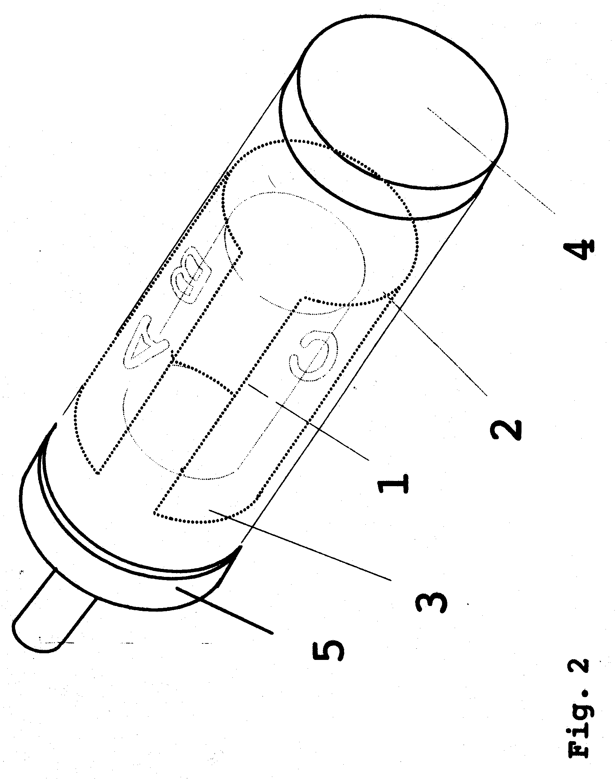

Wie in Figur 2 dargestellt wird das Hauptteil 2 anschließend durch die Deckel 4 und 5 verschlossen. Die Deckel 4 und 5 bilden zusammen mit dem einstückigen Haupteil die komplette Endform. In stichlinierter Darstellung sind der Vorformling 1 und das Etikett 3 sichtbar. Der Vorformling 1 besteht im gezeigten Beispiel aus einem thermoplastischen Werkstoff und ist in dieser Phase noch so warm, daß er verformbar bleibt. Während dem Vorformling 1 durch das Rohr 7 ein Gas zugeführt wird, weitet er sich soweit auf, bis er die Konturen der Endform und damit seine endgültige Form angenommen hat. Dabei wird das Etikett 3 zwischen dem sich aufweitenden Vorformling 1 und der Endform eingepresst. Durch den Kleber 6 wird das Etikett 3 dauerhaft mit dem nun fertigen Gegenstand 8 verbunden.

Das Hauptteil 2 ist einstückig ausgebildet. Insbesondere der Bereich des Hauptteils 2 welcher später mit dem Etikett 3 in Berührung kommen wird ist einstückig ausgebildet. Dies erlaubt es vorteilhaft das Etikett 3 einzusetzten ohne daß die Gefahr eines Verrutschens des Etiketts besteht.

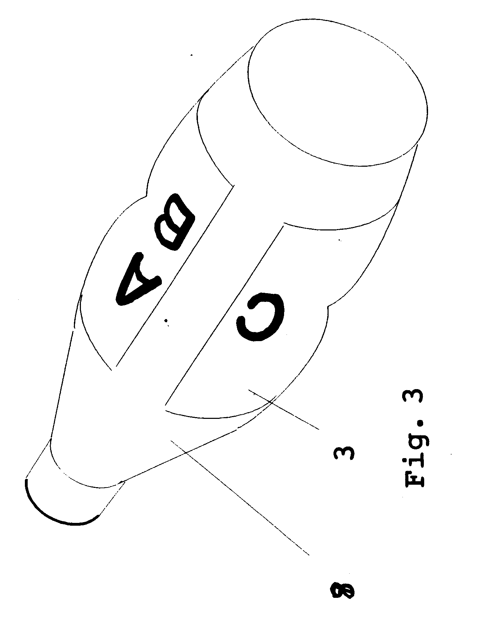

Die Figur 3 zeigt den Gegenstand 8 nach dem Entnehmen aus dem Endformteil 2 in fertigem Zustand mit dem fest sitzenden Etikett 3. Hierbei wird der unweigerlich auftretende Schwund des Spritzmaterials beim Erkalten vorteilhaft ausgenutzt, da so das Etikett 3 beim Schrumpfen des Spritzmaterials von der Innenwand der Endform abgezogen wird.

Im vorliegenden Beispiel ist die dem Vorformling 1 zegewandte Seite des Etiketts 3 mit einem thermisch reaktiven Kleber 6 versehen, der durch die Wärme des Vorformlings 1 aktiviert wird. Nach dem Erkalten des Spritzgußmaterials in der Endform wird der thermisch reaktive Kleber wieder fest und führt zu der dauerhaften Verbindung zwischen Gegenstand 8 und Etikett 3. In der Fachwelt nennt man diese Klebstoffe Heißkleber oder auch 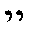 hotmelt" Kleber.

Die Verwendung eines Heißklebers hat den Vorteil, daß die Etiketten einfach zu handhaben sind und während des Handlings nirgends kleben. Erst wenn der Heißkleber nicht erwärmt und damit aktiviert wird klebt auch das Etikett.

Ebenso ist es natürlich möglich, das Etikett mit einem Kleber zu versehen, nachdem das Etikett ganz oder zumindest teilweise in das Endformatteil 2 eingeschoben wurde. Hierbei kann es sich dann um jeden beliebigen Kleber handeln. Die Gefahr, daß die Etiketten während des Handlings irgend wo kleben bleiben ist auch bei dieser Lösung ausgeschlossen, denn die Etiketten befinden sich schon an der Stelle befinden, an der die Endverarbeitung stattfindet.

Es sind jedoch auch beliebige andere Materialien für den herzustellenden Gegenstand bzw. für das Etikett und den Kleber verwendbar, etwa recyclebare und/oder biologisch abbaubare Stoffe wie Stärke oder Zucker.

Bei manchen Materialien ergibt sich bereits durch den bei erhöhter Temperaturen stattfindenden Kontakt zwischen Gegenstand und Etikett eine Verbindung, die den Einsatz eines zusätzlichen Klebers überflüssig macht.

Entscheidend ist der Vorteil, daß das Hauptteil 2 nach dem Einsetzen des Etiketts 3 unverändert bleibt.

## Patentansprüche

1. Verfahren zum Etikettieren von Gegenständen aus Kunststoff, wobei auf einen spritztechnisch hergestellten Gegenstand ein Etikett aufgebracht wird,
- indem eine Vorstufe des spritztechnisch hergestellten Gegenstandes zusammen mit dem Etikett in ein Formteil, welches der Endform des hergestellten Gegenstandes entspricht eingelegt wird und
- die Vorstufe des spritztechnisch hergestellten Gegenstandes in dem Formteil aufgeweitet und das Etikett innerhalb des Formteils mit dem hergestellten Gegenstand verbunden wird
**dadurch gekennzeichnet, daß**
- aufgrund der Steifigkeit des Materials des Etiketts (3), ein Aufspreizen des Etiketts (3) an die Innenseite des Hauptteils (2) der Formteils bewirkt wird und
- das Etikett (3) im Hauptteil (2) des Formteils fixiert wird.

2. Verfahren nach Anspruch 1
**dadurch gekennzeichnet, daß**
- die Vorstufe (1) des spritztechnisch hergestellten Gegenstandes (7) und das Etikett (3) in etwa gleichzeitig in das Hauptteil (2) des Formteils eingelegt wird.

3. Verfahren nach Anspruch 1
**dadurch gekennzeichnet, daß**
- auf der Seite des Etiketts (3), welche mit der aufgeweiteten Vorstufe des spritztechnisch hergestellten Gegenstandes (7) in Kontakt kommt ein Kleber aufgebracht wird.

4. Verfahren nach Anspruch 2
**dadurch gekennzeichnet, daß**
- auf der Seite des Etiketts (3), welche mit der aufgeweiteten Vorstufe des spritztechnisch hergestellten Gegenstandes (7) in Kontakt kommt ein Kleber aufgebracht wird.

5. Verfahren nach Anspruch 3
**dadurch gekennzeichnet, daß**
- auf das Etikett (3) ein thermisch reaktiver Kleber aufgebracht wird.

6. Verfahren nach Anspruch 4
**dadurch gekennzeichnet, daß**
- auf das Etikett (3) ein thermisch reaktiver Kleber aufgebracht wird.

7. Verfahren nach Anspruch 3
**dadurch gekennzeichnet, daß**
- der Kleber auf das Etikett (3) aufgetragen wird, nachdem es zumindest teilweise in das Hauptteil (2) des Formteils eingebracht wurde.

8. Verfahren nach Anspruch 4
**dadurch gekennzeichnet, daß**
- der Kleber auf das Etikett (3) aufgetragen wird, nachdem es zumindest teilweise in das Hauptteil (2) des Formteils eingebracht wurde.

9. Verfahren nach Anspruch 5
**dadurch gekennzeichnet, daß**
- der Kleber auf das Etikett (3) aufgetragen wird, nachdem es zumindest teilweise in das Hauptteil (2) des Formteils eingebracht wurde.

10. Verfahren nach Anspruch 6
**dadurch gekennzeichnet, daß**
- der Kleber auf das Etikett (3) aufgetragen wird, nachdem es zumindest teilweise in das Hauptteil (2) des Formteils eingebracht wurde.
